# EUROPEAN PATENT SPECIFICATION

(11) **EP 4 311 837 B1**
(45) Date of publication and mention of the grant of the patent: **09.04.2025**
(21) Application number: 23020350.7
(22) Date of filing: 19.07.2023
(51) Int. Cl.: C08J 9/00, C08J 9/14, C08G 65/40, C08G 18/40, C08G 18/64, C08G 18/76, C08H 7/00, C08L 97/00

(54) **PROCESS FOR INCORPORATING LIGNIN INTO LIQUID LIGNIN-BASED POLYOLS AND USE OF THE RESULTING PRODUCT FOR THE PREPARATION OF POLYURETHANES**
VERFAHREN ZUR EINARBEITUNG VON LIGNIN IN FLÜSSIGE POLYOLE AUF BASIS VON LIGNIN UND VERWENDUNG DES SO ERHALTENEN PRODUKTS ZUR HERSTELLUNG VON POLYURETHANEN
PROCÉDÉ D'INCORPORATION DE LIGNINE DANS DES POLYOLS LIQUIDES À BASE DE LIGNINE ET UTILISATION DU PRODUIT AINSI OBTENU POUR LA PREPARATION DE POLYURÉTHANES

(30) Priority: 28.07.2022 PT 2022118131
(43) Date of publication of application: 31.01.2024
(73) Proprietor: RAIZ - Instituto De Investigação Da Floresta E Papel, 3800-783 Eixo, Aveiro (PT); Universidade de Aveiro, 3810-193 Aveiro (PT)
(72) Inventor: De Oliveira Rodrigues Pinto, Paula Cristina, 3800-783 Eixo (PT); Evtyugin, Dmitry Victorovitch, 3810-193 Aveiro (PT); Vieira, Fernanda Rosa, 3810-193 Aveiro (PT); Madeira Viegas de Barros Timmons, Ana Margarida, 3810-193 Aveiro (PT)

(56) References cited:
- US-A1- 2019 144 595
- VIEIRA FERNANDA ROSA ET AL: "Oxyalkylation of Lignoboost(TM) Kraft Lignin with Propylene Carbonate: Design of Experiments towards Synthesis Optimization", MATERIALS, vol. 15, no. 5, 1 January 2020 (2020-01-01), pages 1 - 17, XP093072060, DOI: 10.3390/ma15051925

## Description

### FIELD OF THE INVENTION

The present invention relates to a process for incorporating lignin into renewable-based liquid polyols, in particular polyether-type lignin-based polyols obtained by oxyalkylation with cyclic carbonates, resulting in a quantity of more than 30 % by weight of total renewable matter in the polyol. In addition, the invention relates to a process for producing polyurethanes from renewable-based liquid polyols with an increased amount of lignin dissolved in their composition.

### BACKGROUND OF THE INVENTION

Lignin is rich in hydroxyl (OH), phenolic and aliphatic groups and is considered a polyol of renewable origin with great potential to partially replace petrochemical polyols used in the polyurethane industry.

Lignin can be used directly as a crosslinking agent in the synthesis of polyurethanes, through the condensation reaction of lignin's OH groups with isocyanate groups [1]. However, since lignin is a polymer with a high average molecular weight and aromatic structure, crosslinking reactions between lignin's OH groups (especially phenolic OH groups) and isocyanate groups is a challenge due to the steric hindrance inherent to lignin's structure.

Another complementary strategy is the addition of lignin in the solid state without any chemical modification (lignin powder) to the polyol of petrochemical origin for subsequent reaction with isocyanate in the synthesis of polyurethane. The addition of lignin to conventional polyol allowed an increase in the biomass incorporation rate of up to 70 % (w/w), but in this case the polyol became extremely viscous or almost solid [2-4]. In addition, the solid lignin dissolved in the petroleum-based polyol acted as a filler, i.e., it did not allow the formation of a homogeneous liquid product due to its low solubility with these polyols.

One way of increasing the reactivity of lignin with isocyanates is to liquefy the lignin using alkylene oxides (propylene oxide and ethylene), which makes it possible to produce renewable polyether-based polyols with up to 35 % (w/w) lignin [5-7]. Propylene oxide is the most widely used reagent in the lignin oxyalkylation reaction. However, due to the characteristics of this reagent, which is flammable, the reaction requires the use of special reactors (pressurized systems), and the transport of propylene oxide within the member countries of the European Union must follow special rules defined by the "European Agreement concerning the International Carriage of Dangerous Goods by Road (ADR)". In addition, the reaction of propylene oxide with lignin leads to the formation of a considerable amount of homopolymer which can negatively affect the final polyurethane product, for example the rigidity of polyurethane foams [8].

An alternative to propylene oxide is to liquefy the lignin using cyclic carbonates (propylene carbonate, ethylene carbonate, glycerol carbonate), which are considered safe reagents that allow the oxyalkylation reaction to be carried out under atmospheric pressure. However, the incorporation of lignin into the final polyol does not exceed 10 % (w/w) [9-12].

Patent WO2017067769A1 describes the incorporation of lignin in polyurethane products, namely in polyisocyanate compositions which involves dispersing lignin in the polyisocyanate with specific average sizes. Smaller lignin particle sizes lead to better interaction/reaction of the lignin with the isocyanate, more stable lignin dispersions (no sedimentation, even after a longer period of time), and higher viscosity. The amount of dispersed lignin does not exceed 20 % by weight.

Patent application WO2013179251A1 discloses a composition resulting from the addition of dispersants, with a polyol or a mixture of polyols, to a lignin, preferably an alkaline lignin. The lignin has an average particle size of about 100 nm to about 2000 nm and the dispersants have a solubility parameter of about 18 to about 30 MPa and a viscosity of about 15 mPas to about 20.000 mPas. These particle sizes allow these dispersions to be incorporated into thermosetting and thermoplastic industrial products, where lignin can form part of the polymer structure of different products. The lignin content does not exceed 15 % by weight.

Patent application WO2013144453A1 relates to a method for producing a binding composition consisting of forming an aqueous composition made up of lignin molecules, a polymerizable substance and a cross-linking agent in the presence of a catalyst, where the polymerizable substance may be a phenol, cresol, resorcinol and combinations thereof, and where the cross-linking agent is an aldehyde.

Patent application WO2014044234A1 discloses a method of preparing polyurethane materials consisting of the reaction of a polyol with isocyanate in which lignin is added to at least one component of the reaction. The powdered lignin particles are reduced to the size of nanometers and micrometers and are simultaneously dispersed without the use of solvents in a prepolymer containing reactive isocyanate groups.

US2019/144595 A1 relates to alkoxylated lignin for the preparation of rigid polurethane foams.

The processes for incorporating lignin into liquid polyols are therefore limited by the low percentage of lignin incorporated and/or the generation of highly viscous and heterogeneous products.

### References

1. Evtuguin, D. V.; Andreolety, J.P.; Gandini, A. Polyurethanes based on oxygen-organosolv lignin. Eur Polym J 1998, 34, 1163-1169, doi:10.1016/S0014-3057(97)00245-0.
2. Pan, X.; Saddler, J.N. Effect of replacing polyol by organosolv and kraft lignin on the property and structure of rigid polyurethane foam. Biotechnol Biofuels 2013, 6, 1-10, doi:10.1186/1754-6834-6-12.
3. Luo, S.; Gao, L.; Guo, W. Effect of incorporation of lignin as bio-polyol on the performance of rigid lightweight wood-polyurethane composite foams. J Wood Sci 2020, 66, doi:10.1186/s10086-020-01872-5.
4. Hayati, A.N.; Evans, D.A.C.; Laycock, B.; Martin, D.J.; Annamalai, P.K. A simple methodology for improving the performance and sustainability of rigid polyurethane foam by incorporating industrial lignin. Ind Crops Prod 2018, 117, 149-158, doi:10.1016/j.indcrop.2018.03.006.
5. Wu, L.C. ???F; Glasser, W.G. Engineering plastics from lignin. I. Synthesis of hydroxypropyl lignin. J Appl Polym Sci 1984, 29, 1111-1123, doi:10.1002/app.1984.070290408.
6. Nadji, H.; Bruzzèse, C.; Belgacem, M.N.; Benaboura, A.; Gandini, A. Oxypropylation of lignins and preparation of rigid polyurethane foams from the ensuing polyols. Macromol Mater Eng 2005, 290, 1009-1016, doi:10.1002/mame.200500200.
7. Cateto, C.A.; Barreiro, M.F.; Rodrigues, A.E.; Belgacem, M.N. Optimization study of lignin oxypropylation in view of the preparation of polyurethane rigid foams. Ind Eng Chem Res 2009, 48, 2583-2589, doi:10.1021/ie801251r.
8. Belgacem, M.N.; Gandini, A. Monomers , Polymers and Composites; ISBN 9780080453163.
9. Vieira, F.R.; Barros-timmons, A.; Evtuguin, D. V; Pinto, P.C.R. Effect of different catalysts on the oxyalkylation of eucalyptus Lignoboost ® kraft lignin. 2020**.**
10. Kühnel, Is1. Kühnel, I.; Podschun, J.; Saake, B.; Lehnen, R. Synthesis of lignin polyols via oxyalkylation with propylene carbonate. Holzforschung 2015, 69, 531-538.abell; Podschun, J.; Saake, B.; Lehnen, R. Synthesis of lignin polyols via oxyalkylation with propylene carbonate. Holzforschung 2015, 69, 531-538, doi:10.1515/hf-2014-0068.
11. Kühnel, I.; Saake, B.; Lehnen, R. Comparison of different cyclic organic carbonates in the oxyalkylation of various types of lignin. React Funct Polym 2017, 120, 83-91, doi:10.1016/j.reactfunctpolym.2017.09.011.
12. Kühnel, I.; Saake, B.; Lehnen, R. Oxyalkylation of lignin with propylene carbonate: Influence of reaction parameters on the ensuing bio-based polyols. Ind Crop Prod 2017, 101, 75-83, doi:10.1016/j.indcrop.2017.03.002.

### SUMMARY OF THE INVENTION

The present invention relates to a process for incorporating lignin into polyols, comprising the following steps:
i) oxyalkylating a lignin with a cyclic carbonate for producing a polyether polyol;
ii) dissolving between 5 % and 20% by weight of lignin in the liquid polyol obtained in step i);
iii) heating the mixture resulting from step ii) at a temperature of 50 °C to 200 °C, preferably 90 °C to 100 °C, under constant stirring and for a period of time of 0.5 to 24 hours until a homogeneous solution is obtained;
iv) cooling the solution resulting from point iii) to room temperature and obtaining a lignin-based polyether polyol with at least 5% by weight of dissolved lignin.

According to a preferred embodiment, in step ii) the lignin is selected from the group consisting of Kraft lignin, organosolv lignin, soda lignin, hydrolysis lignin, lignosulphonates and combinations thereof.

According to a preferred embodiment, in step i) the cyclic carbonate is selected from the group consisting of propylene carbonate, ethylene carbonate, glycerol carbonate and combinations thereof.

According to a preferred embodiment, the heating of step iii) is carried out over a period of time from 0.5 to 2 hours.

### BRIEF DESCRIPTION OF THE DRAWINGS

Figure 1. Flowchart of the procedure followed to characterize the polyurethane foams.
Figure 2. ¹³C NMR spectrum for qualitative assessment of polyurethane foams. A - Foam with extra lignin; B - Reference foam; C - Lignin.
Figure 3. Infrared spectrum of the reference foam (middle spectrum) and the foam with extra lignin (top spectrum). The bottom spectrum is that of a lignin.
Figure 4. Thermogravimetric analysis of the foams. Filled line - Foam with extra lignin. Dashed line - Reference foam.
Figure 5. Representation of the stress versus deformation of the foams for: (1) foam with 12 % lignin, (2) foam without extra lignin, (3) foam with 10 % lignin and (4) foam with 15 lignin.

### DETAILED DESCRIPTION OF THE INVENTION

A process for incorporating lignin into renewable-based liquid polyols is described here, as described in this patent application and claim 1, which makes it possible to obtain a homogeneous liquid product which, due to the compatibility of lignin with this type of bio-based polyol, allows for a chemical incorporation of total lignin of more than 30 % by weight. The product resulting from this incorporation is still liquid and homogeneous. The reaction takes place in ordinary reactors, without the need for pressurized systems, for example.

Also described is a process for producing polyurethanes from renewable-based polyols with an increased amount of lignin incorporated, in which the reaction between the aliphatic hydroxyl groups of the lignin and the isocyanate groups that have not reacted with the polyol allows for the formation of a more cross-linked polyurethane structure with a higher lignin content in its composition.

In the case of polyurethane foam formulations, this more cross-linked structure results in a foam with better mechanical properties. In addition, increasing the lignin content reduces the number of free isocyanate groups, which translates into a higher level of chemical and thermal stability, as well as in terms of hygiene and safety.

In the context of the present invention, LignoBoost lignin refers to a lignin obtained from the black liquor of the Kraft process using the LignoBoost process in which the lignin is precipitated from the black liquor with the addition of CO₂ with subsequent washing with acidified water and hot water up to pH 5-6.

Kraft refers to Kraft cooking, or sulfate cooking. This chemical process consists of cooking the wood in a cooking liquor usually made up of sodium hydroxide and sodium sulfide, at temperatures of around 140 to 180 °C, in pressurized reactors.

In the context of the present invention, organosolv lignin refers to a lignin obtained from the organosolv process in which the lignin is precipitated with the elimination of solvents or by water precipitation.

In the context of the present invention, soda lignin relates to a lignin obtained from the soda cooking process in which the lignin is precipitated with acidification of the liquor.

In the context of the present invention, hydrolysis lignin refers to lignin obtained during the acid hydrolysis of wood.

In the context of the present invention, lignosulphonates refer to a lignin obtained from the acid sulfite or bisulfite cooking process with different bases.

In the context of the present invention, a polyether polyol refers to polymers with multiple hydroxyl groups formed from cyclic ethers. When produced from lignins, these are also called lignin-based and renewable-based.

In the context of the present invention, any type of technical lignin can be used, for example, but not limited to Kraft lignin, organosolv lignin, soda lignin, hydrolysis lignin. Lignosulphonates can also be used. Isolated lignin is preferably presented in the form of a powder and dried (residual moisture less than 10 %).

The renewable-based polyether polyol is obtained by the oxyalkylation of a lignin with a cyclic carbonate such as, but not limited to, propylene carbonate, ethylene carbonate and glycerol carbonate.

In the present invention, a minimum of 5% by weight of lignin is dissolved in a liquid polyol obtained by the oxyalkylation of a lignin with a cyclic carbonate, followed by the heating of the resulting solution under constant stirring until a homogeneous solution is obtained.

Any suitable reaction vessels can be used, such as, but not limited to, a batch reactor, a continuous reactor or a semi-continuous reactor with mechanical stirrers.

The lignin-based polyol with the dissolved lignin is mixed with a polyisocyanate to produce the polyurethane. Polyisocyanates such as, but not limited to, polymeric diphenylmethane diisocyanate (p-MDI), 1,6 hexamethylene diisocyanate (HDI), 4,4' methylene diphenyl isocyanate, 2,6-toluene isocyanate, 2,4-toluene diisocyanate, can be used.

Depending on the type of polyurethane and its application (foams, adhesives and elastomers), catalysts and other chemical reagents are first added to the lignin-based polyol with the dissolved lignin. These reagents include: surfactants such as different types of silicones, flame retardants, which include organophosphorus and chlorinated halogen compounds, blowing agents such as water and hydrocarbons, biocides such as quaternary ammonium compounds, among others.

The polyisocyanate is then added to the resulting mixture under constant stirring and cured at room temperature, considered in this invention to be between 20 and 40 °C. Curing consists of the formation of crosslinks within the polymeric material resulting from the bonds between isocyanate and hydroxyl groups of different chains.

### Examples

### Incorporation of lignin into a lignin-based liquid polyol

The technical lignin used was isolated from the black liquor of the Kraft cooking process of Eucalyptus globulus wood using the LignoBoost process.

10 g of a liquid lignin-based polyether polyol was weighed into a beaker, to which 1 g of dry LignoBoost lignin was added.

The lignin-based polyether polyol used had a number of hydroxyl groups of 200 mg KOH/g, a viscosity of 5.5 Pa.s and a lignin content of 20% by weight.

The beaker with the mixture was heated on a hotplate under constant magnetic stirring. The mixture was heated to a temperature of 90 °C for 30 minutes at 300 rpm. The final product consisted of a viscous, homogeneous liquid, resulting in the dissolution of 10 % by weight of lignin in the polyol.

The same procedure was carried out for the incorporation of 5 %, 12 %, 15 % and 20 % by weight of lignin, i.e., 5 g, 12 g, 15 g and 20 g of the liquid polyether polyol based on lignin were weighed into a beaker, to which 1 g of dry LignoBoost lignin was added. The resulting mixtures were heated on a hotplate under constant magnetic stirring. The mixtures were heated to a temperature of 90 °C for 30 minutes at 300 rpm. The final products consisted of viscous, homogeneous liquids.

### Use of lignin-based polyol with dissolved lignin to produce polyurethane foams

Rigid polyurethane foams were prepared using the formulations shown in Table 1, with the isocyanate index (NCO/OH) equal to 1.2 for both. Formulations were prepared, one with the lignin-based polyol, but without additional incorporation of lignin in it (Reference Foam) and others with lignin-based polyol with 10 %, 12 % and 15 % dissolved lignin (Foam with extra lignin). For the foam formulations using the lignin-based polyol with increased amounts of dissolved lignin, the amount of isocyanate in the formulation was calculated solely on the basis of the amount of hydroxyl groups (OH) in the lignin-based polyol and the blowing agent (water); the OH groups in the lignin are ignored in this calculation.

In a beaker, the catalyst N,N-dimethylcyclohexylamine (DMCHA) and a polyether-modified polysiloxane surfactant were added to the lignin-based polyol and the components were mixed using a mechanical mixer (900 rpm) for 10 seconds. Next, the blowing agent (water and n-pentane) was added and stirred for a further 10 seconds at 900 rpm, the resulting mixture being labelled "component A". Immediately afterwards, the polymeric MDI isocyanate was added to component A and the mixture was subjected to a further 20 seconds of mechanical stirring (900 rpm). The foams expanded/formed by free growth in the beaker (free-rise).

**Table 1 - Formulations considered for the preparation of rigid polyurethane foams.**

| Formulations of rigid polyurethane foams | | |
|---|---|---|
| Components, % w/w | Reference foam | Foam with extra lignin |
| Lignin powder | 0 | 10 |
| Lignin-based polyol | 100 | 90 |
| DMCHA | 1 | 1 |
| TEGOSTAB B 84501 | 2 | 2 |
| Water | 2 | 2 |
| n-Pentane | 10 | 10 |

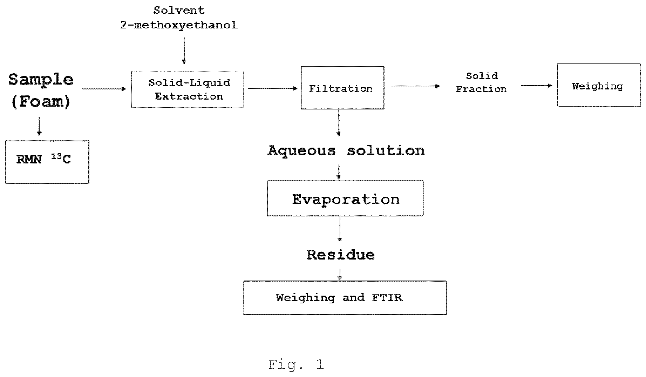

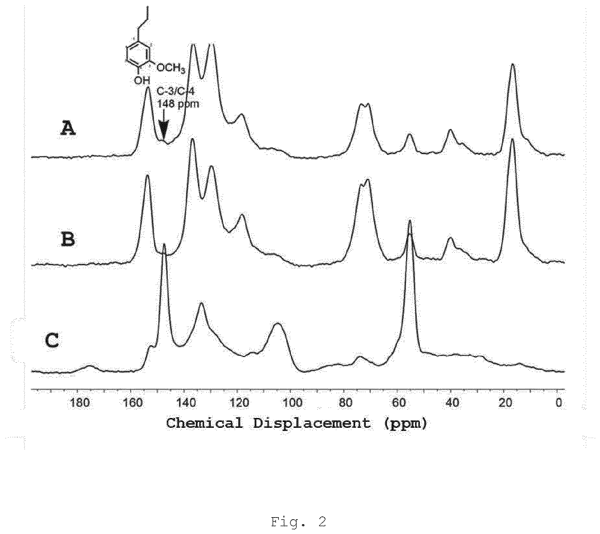

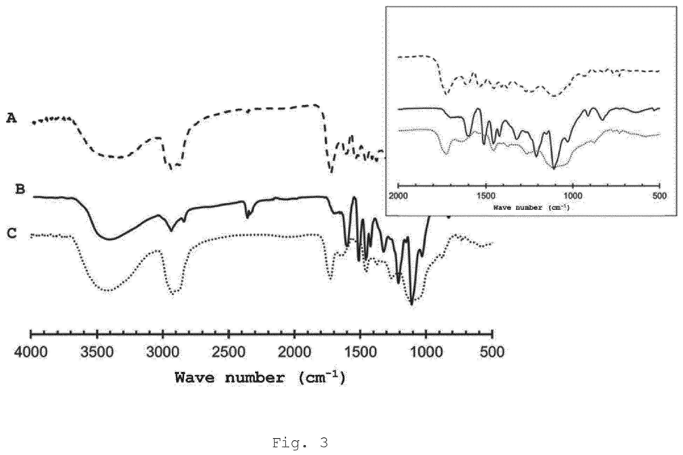

The foams prepared using a lignin-based polyol with a greater amount of renewable raw material were characterised according to the procedure illustrated in Figure 1. Confirmation that the dissolved lignin was incorporated into the polyol and consequently reacted with the isocyanate was carried out using solid-state carbon-13 nuclear magnetic resonance analyses (Figure 2), infrared spectroscopy (Figure 3) and by comparing the final weight of the solid fraction of the reference foam and the foam with extra lignin, the results of which are shown in Table 2.

**Table 2 - Comparison of the final mass of the solid fraction of the reference foam and the foam with extra lignin.**

| Extraction results | | |
|---|---|---|
| Sample | Solid fraction, % w/w | Residue after evaporation, % w/w |
| Reference foam | 91.5 | 1.0 |
| Foam with extra lignin | 95.2 | 1.2 |

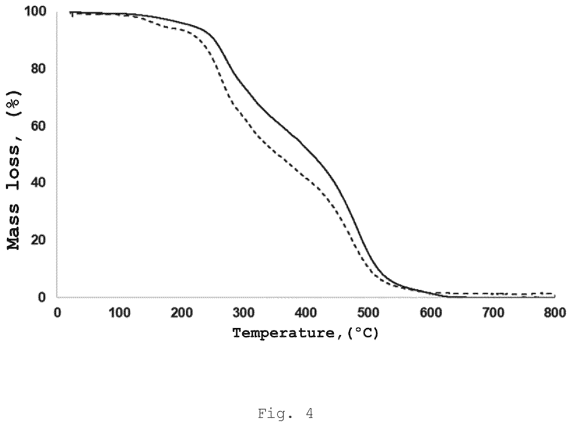

The reaction between the aliphatic OH groups of lignin and the isocyanate groups that did not react with the polyol allows the formation of a more cross-linked polyurethane structure with a higher lignin content in its composition. Additionally, the increase in lignin content allowed the number of free isocyanate groups to be reduced, which translates into a higher level of thermal stability, as can be seen in Figure 4, which relates the loss of mass to the increase in temperature, for the foam produced with the lignin-based polyol with 10% dissolved lignin (foam with extra lignin) and for a reference foam, this is produced from the lignin-based polyol but without additional incorporation of lignin. For the results presented in Figure 4, a thermogravimetric analysis (TGA) was carried out to evaluate the thermal stability of the foams using a SET-SYS Evolution 1750 thermogravimetric analyzer, from room temperature to 800 °C, with a heating rate at 10 °C/min and under oxygen flow (200 mL/min) .

It is possible to verify that the mass of the foam produced with the lignin-based polyol with 10% of lignin dissolved with the increase in temperature occurs at higher temperatures, thus conferring a thermal stability slightly higher than that of the reference foam. Additionally, the behavior of the reference foams and those with extra lignin was evaluated using the cone calorimeter test. Samples with a size of 100 mm × 100 mm × 50 mm were tested with a heat flux of 50 kW.m⁻². Before testing, the specimens were conditioned for a period of 96 hours at 23 ± 2 °C and 50 ± 5% relative humidity, meeting the constant mass criteria. The specimens were wrapped in a single layer of aluminum foil, with the shiny side facing the test body. The average heat release rate (TLC) and the maximum heat release rate (TMLC)) were determined according to ISO 5660 and are shown in Table 3. Three measurements were taken for each sample. TLC is one of the most important variables in the flammability of materials, corresponding to the amount of heat generated per unit area and time. It was observed that the TLC and TMLC values of the foam with extra lignin are lower when compared to the reference foam, thus confirming the flame retardant effect of lignin due to its aromatic structure which may be able to produce a certain amount of char residue by heating at a high temperature, reducing the heat of combustion. Finally, the time to ignition, which corresponds to the minimum time needed to cause a combustible material to ignite and burn continuously when exposed to a certain heat flux, could not be determined due to the speed at which ignition occurs and the relative errors associated with it. However, it was clearly observed that the foam with lignin burns more slowly, with a layer of charcoal forming around the sample, which is not the case with the reference foam.

**Table 3 - TLC and TMLC values for the reference foam and the foam with extra lignin.**

| Properties | Reference foam | Foam with extra lignin |
|---|---|---|
| TLC_{60seconds}, kW.m⁻² | 72.8 | 4.8 |
| TLC_{300seconds}, kW.m⁻² | 29.3 | 17.9 |
| TMLC, kW.m⁻² | 110.8 | 6. 9 |
| Residue, % | 60.3 | 73.0 |

| | | |
|---|---|---|
| TLC- average heat release rate; TMLC- maximum heat release rate | | |

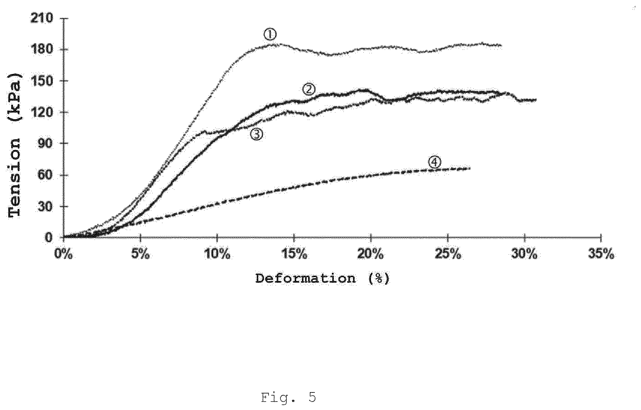

Figure 5 shows the mechanical properties of the foams produced with the lignin-based polyol with 10%, 12% and 15% dissolved lignin, in terms of the deformation suffered by the application of a given stress. The mechanical tests were carried out on an Instron 5966 universal machine equipped with a 20 kN load cell according to the ISO 844:2014 standard and 2X2X2 cm³ dimensions. The foams were placed between the two parallel plates and compressed at 10 mm/min up to 30% deformation, the analysis was carried out in the direction of foam formation. It was found that the incorporation of lignin dissolved in the polyol used to produce the polyurethane foams resulted in a greater resistance to applied stress.

## Claims

1. A process for incorporating lignin into polyols, comprising the following steps:
i) oxyalkylating a lignin with a cyclic carbonate for producing a polyether polyol;
ii) dissolving between 5 % and 20% by weight of lignin in the liquid polyol obtained in step i) ;
iii) heating the mixture resulting from step ii) at a temperature of 50 °C to 200 °C, preferably 90 °C to 100 °C, under constant stirring and for a period of time of 0.5 to 24 hours until a homogeneous solution is obtained;
iv) cooling the solution resulting from point iii) to room temperature and obtaining a lignin-based polyether polyol with at least 5% by weight of dissolved lignin.

2. The process according to the preceding claim wherein in step ii) the lignin is selected from the group consisting of Kraft lignin, organosolv lignin, soda lignin, hydrolysis lignin, lignosulphonates and combinations thereof.

3. The process according to any one of the preceding claims wherein in step i) the cyclic carbonate is selected from the group consisting of propylene carbonate, ethylene carbonate, glycerol carbonate and combinations thereof.

4. The process according to any one of the preceding claims wherein the heating of step iii) is carried out over a period of time from 0.5 to 2 hours.

## Patentansprüche

1. Verfahren zur Einbindung von Lignin in Polyole, umfassend die folgenden Schritte:
i) Oxyalkylierung von Lignin mit einem cyclischen Carbonat zur Herstellung eines Polyetherpolyols;
ii) Auflösen von 5 bis 20 Gew.-% Lignin in dem flüssigen Polyol, das in Schritt i) erhalten wurde;
iii) Erhitzen der aus Schritt ii) resultierenden Mischung auf eine Temperatur zwischen 50 °C und 200 °C, vorzugsweise zwischen 90 °C und 100 °C, unter ständigem Rühren für eine Dauer von 0,5 bis 24 Stunden, bis eine homogene Lösung erhalten wird;
iv) Abkühlen der aus Schritt iii) resultierenden Lösung auf Raumtemperatur und Erhalt eines ligninbasierten Polyetherpolyols, das mindestens 5 Gew.-% gelöstes Lignin enthält.

2. Verfahren nach Anspruch 1, wobei in Schritt ii) das Lignin aus der Gruppe ausgewählt ist, die Kraft-Lignin, Organosolv-Lignin, Soda-Lignin, Hydrolyse-Lignin, Ligninsulfonate und deren Kombinationen umfasst.

3. Verfahren nach einem der vorhergehenden Ansprüche, wobei in Schritt i) das cyclische Carbonat aus der Gruppe ausgewählt ist, die Propylencarbonat, Ethylencarbonat, Glycerincarbonat und deren Kombinationen umfasst.

4. Verfahren nach einem der vorhergehenden Ansprüche, wobei das Erhitzen in Schritt iii) über einen Zeitraum von 0,5 bis 2 Stunden durchgeführt wird.

## Revendications

1. Procédé d'incorporation de lignine dans des polyols, comprenant les étapes suivantes :
i. oxyalkyler une lignine avec un carbonate cyclique pour produire un polyéther polyol ;
ii. dissoudre entre 5 % et 20 % en poids de lignine dans le polyol liquide obtenu à l'étape i) ;
iii. chauffer le mélange résultant de l'étape ii) à une température comprise entre 50 °C et 200 °C, de préférence entre 90 °C et 100 °C, sous agitation constante et pendant une durée de 0,5 à 24 heures, jusqu'à l'obtention d'une solution homogène ;
iv. refroidir la solution résultant de l'étape iii) à température ambiante et obtenir un polyéther polyol à base de lignine contenant au moins 5 % en poids de lignine dissoute.

2. Le procédé selon la revendication précédente, dans lequel, à l'étape ii), la lignine est sélectionnée dans le groupe constitué de la lignine Kraft, la lignine organosolv, la lignine soda, la lignine d'hydrolyse, les lignosulfonates et leurs combinaisons.

3. Le procédé selon l'une quelconque des revendications précédentes, dans lequel, à l'étape i), le carbonate cyclique est sélectionné dans le groupe constitué de carbonate de propylène, carbonate d'éthylène, carbonate de glycérol et leurs combinaisons.

4. Le procédé selon l'une quelconque des revendications précédentes, dans lequel le chauffage de l'étape iii) est effectué sur une durée comprise entre 0,5 et 2 heures.
